# EUROPÄISCHE PATENTSCHRIFT

(11) **EP 2 692 506 B1**
(45) Veröffentlichungstag und Bekanntmachung des Hinweises auf die Patenterteilung: **12.11.2014**
(21) Anmeldenummer: 13178538.8
(22) Anmeldetag: 30.07.2013
(51) Int. Cl.: B29C 49/36, B29C 49/46

(54) **Vorrichtung und Verfahren zum Umformen von Kunststoffvorformlingen mit getrennten Strömungswegen für Blasluft und Steuerluft**
Device and method for forming plastic pre-forms with separate conduits for blowing air and control air
Dispositif et procédé destinés à la transformation d'ébauches en plastique avec voies d'écoulement séparées pour l'air de réglage et l'air de soufflage

(30) Priorität: 30.07.2012 DE 102012106916
(43) Veröffentlichungstag der Anmeldung: 05.02.2014
(73) Patentinhaber: Krones AG, 93073 Neutraubling (DE)
(72) Erfinder: Brunner, Andreas, 93073 Neutraubling (DE)
(74) Vertreter: Hannke, Christian

(56) Entgegenhaltungen:
- EP-A1- 1 122 168
- EP-A2- 2 388 128
- DE-A1-102008 038 141
- DE-A1-102008 038 143

## Beschreibung

Die vorliegende Erfindung bezieht sich auf eine Vorrichtung zum Umformen von Kunststoffvorformlingen zu Kunststoffbehältnissen. Derartige Maschinen sind aus dem Stand der Technik seit langem bekannt, beispielsweise in Form von Streckblasmaschinen. Üblicherweise weisen diese Maschinen einen drehbaren Träger auf, an dem eine Vielzahl von Umformungsstationen angeordnet ist. In den einzelnen Umformungsstationen werden die erwärmten Kunststoffvorformlinge mittels einer linear angetriebenen Reckstange gereckt und durch ein gasförmiges Medium und insbesondere Druckluft in Blasformen expandiert. Bestimmte Produkte wie Fruchtsaftgetränke oder Milchgetränke erfordern eine möglichst aseptische Abfüllung, um eine erforderliche Mindesthaltbarkeit zu erreichen. Eine Möglichkeit, dies zu realisieren, ist die sterile Fertigung der zur Abfüllung verwendeten Kunststoffbehältnisse. Hierbei ist eine Versorgung der Blasstationen mit steriler Druckluft notwendig. Diese sterile Druckluft dient dabei als Umformmedium für die Kunststoffbehältnisse.

Aus der EP 2 388 128 A2 ist eine Vorrichtung und ein Verfahren zum Reinigen von Gas in Blasmaschinen bekannt. Dabei ist in wenigstens einer Gasleitung, welche eine Gaszuleitung oder ein Gasableitung einer Blasstation sein kann, wenigstens eine Gasaufbereitungseinrichtung angeordnet, die in der Lage ist, Gas steril zu filtern und/oder eine Menge eines in dem durchströmenden und/oder vorbeiströmenden Gas enthaltenen oxidativen Desinfektions- oder Sterilisationsmittels zu reduzieren.

Im Stand der Technik ist es üblich, Druckluft von einer Druckluftquelle aus dem stationären Maschinenabschnitt über eine Verteilereinrichtung (wie etwa einen Drehverteiler) in den drehenden Maschinenabschnitt, d.h. ein Karussell, zu leiten. In diesem drehenden Maschinenabschnitt wird die Druckluft von der Verteileinrichtung üblicherweise Druckreduziereinheiten zugeführt. Diese Druckreduziereinheiten bereiten die Blasluft auf unterschiedliche für den Umformungsprozess benötigte Druckniveaus auf. Die Druckreduziereinheiten sind dabei beispielsweise als kompakte Baugruppen mit Domdruckreglern und Anschlussvorrichtungen für Drucklufteingang und Druckluftausgang ausgeführt.

Im Rahmen der Erfindung ist es dabei möglich, dass diese Druckreduziereinheiten in Umfangsrichtung sternförmig um die Verteileinrichtung angeordnet sind und gegebenenfalls auch über eine Flanschverbindung unmittelbar an der Verteileinrichtung angeschlossen sind. Weiterhin ist es auch denkbar, dass die Druckluft mit unterschiedlichen Druckniveaus von Reduziereinheiten mittels Schlauchleitungen verschiedenen Ringkanälen zugeführt wird. Diese Ringkanäle verteilen die Druckluft auf die Blasstationen.

Daneben erfolgt neben der Versorgung der einzelnen Umformungsstationen mit Druckluft als Umformmedium der Kunststoffbehältnisse in dem drehenden Maschinenabschnitt üblicherweise auch eine Bereitstellung von Steuerluft mit unterschiedlichen Druckniveaus und Aufgaben. Diese Steuerluft wird beispielsweise zum Schalten von Ventilen in der Blasstation benötigt. Die Steuerluft wird dabei üblicherweise im drehenden Maschinenabschnitt von dem Blasluftstrang abgezweigt und durch Reduziereinrichtungen auf die benötigten Druckniveaus reduziert.

Ein Nachteil dieser Ausführung ist, dass es hier oftmals schwierig ist, eine sterile Blasluftversorgung zu gewährleisten. In dem Blasluftstrang sind insbesondere die Abdichtungen der Komponenten zueinander und die Anbindungen der Schlauchleitungen zu deren Anschlüssen eine potenzielle Quelle für die Verunreinigung der Blasluft. Die Abdichtungen sind als konventionelle O-Ring- und Quad-Ring- Abdichtungen ausgeführt. In den Spalten zwischen diesen Dichtgummis und der zugehörigen Nut können sich Mikroorganismen vermehren und die Blasluft kontaminieren.

Der Einsatz von insbesondere sehr heißen Sterilisationsmitteln ist wiederum problematisch für die in dem Steuerluftstrang befindlichen Ventile.

Der vorliegenden Erfindung liegt daher die Aufgabe zugrunde, die Versorgung mit steriler Blasluft in derartigen Blasformmaschinen zu verbessern.

Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist einen beweglichen Träger auf, an dem eine Vielzahl von Umformungsstationen zum Umformen der Kunststoffvorformlinge zu den Kunststoffbehältnissen angeordnet ist. Jede Umformungsstation weist dabei eine Beaufschlagungseinrichtung auf, welche die Kunststoffvorformlinge zu deren Expansion mit einem gasförmigen Medium beaufschlagt. Weiterhin ist eine Druckbereitstellungseinrichtung vorgesehen, welche das gasförmige Medium bereitstellt, wobei diese Druckbereitstellungseinrichtung stationär angeordnet ist und die Umformungsstation über wenigstens eine Verbindungsleitung mit dem gasförmigen Medium (insbesondere zur Expansion der Kunststoffvorformlinge) versorgt. Weiterhin ist eine Verteileinrichtung vorgesehen, welche das gasförmige Medium von der stationär angeordneten Druckbereitstellungseinrichtung an die beweglich angeordneten Umformungsstationen verteilt, wobei jede Umformungsstation wenigstens eine pneumatisch betätigte Ventileinrichtung aufweist und wobei diese Ventileinrichtung ebenfalls in Fluidkommunikation mit der Druckbereitstellungseinrichtung steht und von dieser versorgt wird.

Weiterhin weist die Vorrichtung einen Reinraum auf, innerhalb dessen die Umformungsstationen wenigstens abschnittsweise angeordnet sind, wobei dieser Reinraum mittels wenigstens einer Wandung gegenüber einer Umgebung abgegrenzt ist.

Erfindungsgemäß sind eine Steuerluftleitung, welche die Ventileinrichtung mit einem Steuergas versorgt, und eine Blasluftleitung, welche die Umformungsstationen mit dem gasförmigen Medium versorgt, in einer Strömungsrichtung des gasförmigen Mediums zumindest stromabwärts der Verteileinrichtung (insbesondere vollständig) voneinander getrennt.

Unter der Steuerluft wird dabei insbesondere solche Luft verstanden, welche zum Betätigen und insbesondere zum Schalten der Ventile dient. Daneben kann diese Steuerluft jedoch auch verwendet werden, um andere Vorgänge durchzufahren wie etwa eine Bewegung eine Reckstange oder eine Bewegung von Blasformteilen oder auch die Beaufschlagung eines Druckkissens, welches die Blasformteile aneinander drückt.

Es wird daher im Rahmen der Erfindung vorgeschlagen, dass jedenfalls ab der Verteileinrichtung die Steuerluft und die Blasluft voneinander getrennt geführt werden. Diese Ausführungsform bietet den Vorteil, dass die Medien in der Blasluftleitung und in der Steuerluftleitung unterschiedliche Reinheitsgrade aufweisen können. Während die Blasluft steril sein sollte, muss dies für die Steuerluft, welche die Ventile betätigt, nicht notwendigerweise der Fall sein. Vorteilhaft sind auch diejenigen Elemente, welche durch die Steuerluft betätigt werden, außerhalb des Reinraumes angeordnet, so dass auch auf diese Weise keine kontaminierte oder unsterile Luft in den Reinraum gelangen kann.

Es wird daher eine klare Trennung zwischen Blasluft- und Steuerluftstrang in dem beweglichen und insbesondere drehenden Maschinenabschnitt vorgeschlagen. Die Blasluft und die Steuerluft werden durch zwei getrennte Stränge aus dem stationären Maschinenabschnitt durch die Verteileinrichtung in den drehenden Maschinenabschnitt geleitet.

Vorteilhaft sind die Umformungsstationen vollständig in dem besagten Reinraum angeordnet. Dabei ist besonders bevorzugt dieser Reinraum ring- bzw. torusförmig um einen Bewegungspfad der Umformungsstationen angeordnet. Bei dem beweglichen Träger handelt es sich bevorzugt um einen drehbaren Träger bzw. um ein Blasrad, an dem eine Vielzahl von Umformungsstationen angeordnet ist. Es ist weiterhin bevorzugt möglich, dass ein Bereich der besagten Verteileinrichtung insbesondere der stationäre Bereich noch in einem unsterilen Bereich angeordnet ist.

Bei einer weiteren vorteilhaften Ausführungsform ist eine erste Zuführleitung vorgesehen, welche der Verteileinrichtung das Steuergas (im Folgenden auch als Steuerluft bezeichnet) zuführt und eine zweite Zuführleitung, welche der Verteileinrichtung die Blasluft zuführt. Dabei sind in einer Strömungsrichtung des gasförmigen Mediums stromaufwärts der Verteileinrichtung diese Zuführleitungen wenigstens abschnittsweise voneinander getrennt. Diese Ausgestaltung ist insbesondere dann vorteilhaft, wenn eine Sterilisation der Stränge vorgesehen ist. Auf diese Weise ist es nämlich möglich, ein heißes Sterilisationsmittel direkt dem Blasluftstrang zuzuführen, nicht jedoch dem Steuerluftstrang, in welchem hitzeempfindliche Elemente angeordnet sind.

Bevorzugt sind daher die Steuerluft und die Blasluft bereits über die Verteileinrichtung hinweg getrennt geführt.

Bei einer weiteren vorteilhaften Ausführungsform ist in wenigstens einer Verbindungsleitung, über welche den Umformungsstationen Blasluft zugeführt wird, eine Reinigungseinrichtung zum Reinigen der Blasluft vorgesehen. Damit wird hier eine Integration von Reinigungseinrichtungen, beispielsweise von Filtern und insbesondere von Hepa-Filtern, in den Blasluftstrang vorgeschlagen, um die Versorgung mit steriler Blasluft zu ermöglichen. Bevorzugt werden diese Filtereinrichtungen in dem drehenden Maschinenabschnitt eingesetzt und insbesondere in Reduziereinheiten integriert.

Damit weist bevorzugt die Vorrichtung wenigstens eine Druckminderungseinrichtung auf, welche zwischen der Druckbereitstellungseinrichtung und den Umformungsstationen ist. Vorteilhaft ist diese Druckminderungseinrichtung bzw. Reduziereinrichtung in dem beweglichen Maschinenteil, d.h. stromabwärts der Verteileinrichtung, angeordnet. Damit ist diese Druckminderungseinrichtung jedoch über die Verteileinrichtung bevorzugt in einer Strömungsverbindung mit der Druckbereitstellungseinrichtung und andererseits auch den Umformungsstationen. Während des Blasvorganges werden üblicherweise mehrere Druckniveaus zur Expansion der Behältnisse zur Verfügung gestellt, wie beispielsweise ein Vorblasdruck und ein Fertigblasdruck. Diese Druckminderungseinrichtungen mindern den von der Druckbereitstellungseinrichtung zur Verfügung gestellten Druck auf die gewünschten Druckniveaus.

Vorteilhaft ist dabei diese Druckminderungseinrichtung als modulare Baugruppe ausgeführt. Dabei ist es möglich, dass in dieser modularen Baugruppe die eigentliche Druckminderungseinrichtung und ein oder mehrere Filterungseinrichtungen seriell angeordnet sind. Vorteilhaft werden dabei diese Komponenten der Druckreduziereinheit durch aseptische Abdichtungen und insbesondere spaltfreie aseptische O-Ring-Abdichtungen abgedichtet.

Vorteilhaft ist damit die Druckminderungseinrichtung zwischen der Verteileinrichtung und den Umformungsstationen angeordnet.

Damit lässt sich der Blasluftstrang in zwei Abschnitte einteilen, nämlich einen unsterilen Bereich von der Druckbereitstellungseinrichtung bzw. Druckluftquelle bis hin zu den Filterungseinrichtungen und einen sterilen Bereich beginnend bei den Filtereinrichtungen bis hin zu der Druckbeaufschlagungseinrichtung der Kunststoffbehältnisse in der Umformungsstation. Bei dieser Druckluftbeaufschlagungseinrichtung der Kunststoffbehältnisse handelt es sich insbesondere um eine Blasdüse, welche zur Expansion der Behältnisse auf deren Mündung aufgesetzt wird. Die Positionierung dieser Filterungseinrichtungen in dem Blasluftstrang ist mit den Druckminderungseinrichtungen bevorzugt so gewählt, dass ein möglichst kleiner Abschnitt des Blasluftstranges als steriler Bereich ausgeführt ist. Die Gefahr einer Kontamination des sterilen Bereiches wird durch eine kleine Anzahl an Komponenten mit zugehörigen Abdichtungen in diesem Blasluftstrang minimiert.

Bei einer weiteren vorteilhaften Ausführungsform ist die Druckminderungseinrichtung zwischen der Verteileinrichtung und der Reinigungseinrichtung angeordnet. Dies bedeutet, dass zunächst der zur Verfügung gestellte Druck reduziert wird und erst anschließend der Reinigungsvorgang vorgenommen wird.

Bei einer weiteren vorteilhaften Ausführungsform weist die Vorrichtung wenigstens eine Sammelleitung auf, die wenigstens zeitweise in Strömungsverbindung mit den einzelnen bzw. mit mehreren Umformungsstationen steht. Insbesondere handelt es sich bei dieser Sammelleitung um eine Ringleitung, von der mehrere Zuführungen zu den einzelnen Umformungsstationen abzweigen. Bevorzugt versorgt diese Ringleitung insbesondere alle Umformungsstationen.

Bei einer weiteren vorteilhaften Ausführungsform weist die Vorrichtung eine Zuführleitung für ein Sterilisationsmedium auf, wobei diese Zuführleitung mit der Blasluftleitung in Strömungsverbindung bringbar ist. Dabei ist, wie oben erwähnt, vorgesehen, dass diese Zuführleitung bzw. das Sterilisationsmittel nicht in den Steuerluftstrang gelangen kann, sondern lediglich in den Blasluftstrang. Bevorzugt mündet diese Zuführleitung für das Sterilisationsmedium in die Zuführleitung für die Blasluft, insbesondere also noch vor der Verteileinrichtung. Damit können auch bereits die Strömungswege für die Blasluft vor der Verteileinrichtung sterilisiert bzw. gereinigt werden.

Mit anderen Worten lässt sich der Blasluftstrang in dem beweglichen bzw. drehenden Maschinenabschnitt durch ein gasförmiges Sterilisationsmedium sterilisieren. Das gasförmige Sterilisationsmedium, vorzugsweise ein gasförmiges H₂O₂-Luft -Gemisch, wird in einem nicht produktiven Sterilisationsprozess durch eine separate Leitung in die Verteileinrichtung eingespeist. Das gasförmige Sterilisationsmedium sterilisiert den Blasluftstrang von der Verteileinrichtung bis zu der Druckbeaufschlagungseinrichtung der Kunststoffbehältnisse in der Umformungsstation. Dabei werden insbesondere die Hepa-Filter durchspült und eventuell in den Filtern abgeschiedene Mikroorganismen durch das Sterilisationsmedium abgetötet.

Wie oben erwähnt, ist der Steuerluftstrang bevorzugt durchgehend von der Druckluftquelle bis zu den Verbrauchern als unsteriler Bereich ausgeführt. Dies bedeutet, dass in dem Steuerluftstrang bevorzugt weder Hepa-Filter noch aseptische Abdichtungen eingesetzt werden. Auf diese Maßnahmen kann in dem Steuerluftstrang verzichtet werden, da die Steuerluft nicht in Berührung mit den Kunststoffbehältnissen kommen kann.

Die oben erwähnte Filterung der Blasluft durch die Hepa-Filter ermöglicht die Versorgung der Umformungsstationen mit einem sterilen Umformmedium. Eine Kontamination der umgeformten Kunststoffbehältnisse durch ein verunreinigtes Umformmedium wird dadurch minimiert. Vorteilhaft sind die Filtereinrichtungen derart ausgeführt, dass sie eine Beständigkeit gegenüber einem Sterilisationsmittel, wie insbesondere Wasserstoffperoxid (H₂O₂) aufweisen. Vorteilhaft weisen diese Filtereinrichtungen auch eine Temperaturbeständigkeit bis hin zu 100°, bevorzugt bis hin zu 120° und besonders bevorzugt bis hin zu 140° auf. Eine Sterilisation dieser Filtereinrichtungen bzw. auch des Blasluftstranges erfolgt damit bevorzugt durch ein gasförmiges H₂O₂-Luft-Gemisch und insbesondere in einem nicht produktiven Sterilisationsprozess.

Durch die erwähnte Positionierung der Filtereinrichtungen in einem drehenden Maschinenabschnitt nach den Vorrichtungen zur Druckreduzierung d.h. den Druckminderungseinrichtungen, (bei denen es sich insbesondere um Domdruckregler handelt) wird der sterile Abschnitt des Blasluftstranges möglichst klein gehalten. Die Gefahr einer Kontamination des sterilen Bereiches wird durch eine kleine Anzahl an Komponenten mit zugehörigen Abdichtungen in dem Blasstrang minimiert. Eine Integration der Filtereinrichtungen zusammen mit den Druckminderungseinrichtungen bzw. Domdruckreglern in eine kompakte Baugruppe weist den zusätzlichen Vorteil auf, dass Verbindungskomponenten und zusätzliche Abdichtungen zwischen der Druckminderungseinrichtung und den Filtereinrichtungen minimiert werden können.

Die Trennung des Blasluftstranges von dem Steuerluftstrang in dem drehenden Maschinenabschnitt hat den Vorteil, dass der Steuerluftstrang nicht steril ausgeführt werden muss. Es kann damit, wie oben erwähnt, auf kostspielige Filterungseinrichtungen und auch aseptische O-Ring-Abdichtungen in diesem Steuerluftstrang verzichtet werden.

Die vorliegende Erfindung ist weiterhin auf ein Verfahren zum Umformen von Kunststoffvorformlingen zu Kunststoffbehältnissen gerichtet, wobei die Kunststoffvorformlinge mittels einer Transporteinrichtung entlang eines vorgegebenen Transportpfades transportiert werden und während dieses Transportes von einer Vielzahl von Umformungsstationen durch Beaufschlagung mit Druckluft zu den Kunststoffbehältnissen umgeformt werden. Dabei werden die Kunststoffvorformlinge während dieser Umformung innerhalb eines Reinraums transportiert und eine Blasluft zum Umformen der Kunststoffvorformlinge wird durch eine stationär angeordnete Druckbereitstellungseinrichtung bereit gestellt und über Verbindungsleitungen sowie eine Verteileinrichtung den Umformungsstationen zur Verfügung gestellt und wenigstens eine Ventileinrichtung der Vorrichtung wird pneumatisch betätigt.

Erfindungsgemäß sind eine Steuerluft zum Betätigen der Ventileinrichtung und die Blasluft zum Umformen der Kunststoffvorformlinge wenigstens stromabwärts der Verteileinrichtung voneinander getrennt. Vorteilhaft weisen daher die Steuerluft und die Blasluft unterschiedliche Reinheitsgrade auf, wobei insbesondere als Blasluft Sterilluft eingesetzt wird. Vorteilhaft wird die Blasluft auf mehrere unterschiedliche Druckstufen reduziert. Bei einem weiteren vorteilhaften Verfahren erfolgt eine Druckminderung der Blasluft auf wenigstens zwei unterschiedliche Druckniveaus und vorteilhaft erfolgt diese Druckminderung erst nach der Verteileinrichtung. Vorteilhaft erfolgt eine Reinigung der Blasluft, wobei besonders bevorzugt diese Reinigung erst nach der Druckminderung erfolgt.

Weitere Vorteile und Ausführungsformen ergeben sich aus den beigefügten Zeichnungen:
Darin zeigen:
   - Fig. 1: eine schematische Darstellung einer Anlage zum Umformen von Kunststoffvorformlingen zu Kunststoffbehältnissen;
   - Fig. 2: eine Schnittdarstellung einer Vorrichtung zum Umformen von Kunststoffvorformlingen zu Kunststoffbehältnissen; und
   - Fig. 3: eine schematische Darstellung zur Veranschaulichung der Strömungswege für Blasluft und Steuerluft.

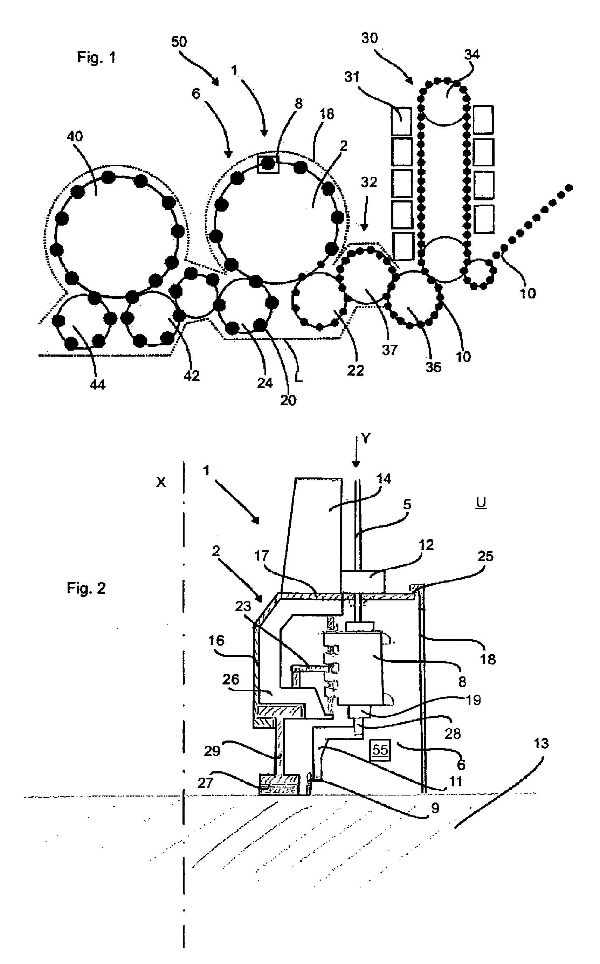

Figur 1 zeigt eine schematische Darstellung einer Anlage zum Herstellen von Kunststoffbehältnissen nach dem Stand der Technik. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 6 bezeichnet in seiner Gesamtheit einen Reinraum, dessen Außenbegrenzungen hier durch die punktierte Linie L angedeutet sind. In einer weiteren bevorzugten Ausführungsform ist der Reinraum 6 nicht nur im Bereich des Transportrads 2 und der Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 6 hier in dem Bereich der Sterilisationseinheit 32 beginnt. In diesem Bereich können Schleuseneinrichtungen vorgesehen sein, um die Kunststoffvorformlinge in den Reinraum 6 einzuführen, ohne dass dabei zu viel Gas innerhalb des Reinraums strömt und so verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden. Der Reinraum kann auch zumindest abschnittsweise kanalartig um den Transportpfad der Behältnisse ausgeführt sein.

Das Bezugszeichen 1 bezeichnet in seiner Gesamtheit eine Umformungsvorrichtung, bei der an einem Transportrad 2 eine Vielzahl von Blasstationen bzw. Umformungsstationen 8 angeordnet ist, wobei hier lediglich einer dieser Blasstationen 8 dargestellt ist. Mit diesen Blasstationen 8 werden die Kunststoffvorformlinge 10 zu Behältnissen 20 expandiert. Obwohl hier nicht detailliert gezeigt, befindet sich nicht der gesamte Bereich des Transporteinrichtung 2 innerhalb des Reinraums 6, sondern der Reinraum 6 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 6 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 20 von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 6. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 6 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 6 im Bereich der Vorrichtung 1 auf einen geringst möglichen Bereich reduziert, nämlich im Wesentlichen auf die Blasstationen 8 selbst. Durch diese kleinbauende Gestaltung des Reinraums 6 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 nach dem Stand der Technik im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 6, der hier kanalartig ausgebildet ist, geführt. Dieser Reinraum 6 wird abgeschlossen durch eine bewegliche Seitenwand 16 und einen einteilig mit dieser Seitenwand 6 ausgebildeten Deckel 17. Diese Seitenwand 6 und der Deckel 17 drehen dabei mit der Blasstation 8 mit.

Das Bezugszeichen 18 bezieht sich auf eine weitere Wandung, welche den Reinraum 6 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise unter Verwendung eines Wasserschlosses. Der untere Bereich der Wandung 18 ist fest und abdichtend an einem Boden 13 angeordnet. Innerhalb des Reinraums 6 und hier unmittelbar an der Wandung 16 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 6 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 6 angeordnet. Es wäre jedoch beispielsweise auch möglich, etwa bereits einen Abschnitt 11 unterhalb der einzelnen Blasstationen 8 aus dem Reinraum 6 herauszuführen.

Die Transporteinrichtung 2 kann noch weitere Elemente aufweisen, welche oberhalb des Reinraums 6 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 14 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 6 als auch innerhalb des Reinraums 6 sind. Zu diesem Zweck ist es möglich, außerhalb des Reinraums 6 bzw. oberhalb des Schlittens 12 eine Schutzeinrichtung wie einen Faltenbalg vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 6. Das Bezugszeichen 19 kennzeichnet einen Träger zum Tragen einer Bodenform, welche ebenfalls einen Bestandteil der Blasform ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 6 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen. Diese Sterilisationseinrichtung bzw. Beaufschlagungseinrichtung 55 kann sich am Transportrad 2 oder an der stehenden Wandung 18 befinden oder generell stationär angeordnet sein und aus Düsen oder ähnlichem bestehen. Zudem ist es vorteilhaft, Sterilluft zum Sterilisieren des Reinraums 6 über das Lüftungssystem in den Reinraum 6 einzubringen.

Die (nicht gezeigten) Blasformen sind innerhalb der Blasformträger angeordnet. Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

Es wäre jedoch auch (anders als in Fig. 2 gezeigt) möglich und bevorzugt, dass die Transporteinrichtung 2 bzw. der Träger einen C-förmigen Außenumfang aufweist, der auch teilweise die Außenwandungen des Reinraums ausbildet. Damit dreht sich hier diese C - förmige Reinraumwand mit der Transporteinrichtung 2 d.h. dem Blasrad. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Außenwandung des Reinraums statt. Diese Außenwandung ist dabei vorteilhaft stationär angeordnet.

Bei einer weiteren vorteilhaften Ausführungsform weist die Vorrichtung einen (nicht gezeigten Ventilblock auf, in dem Ventile angeordnet sind, welche die Zufuhr der Druckluft an die einzelnen Umformungsstationen steuern.

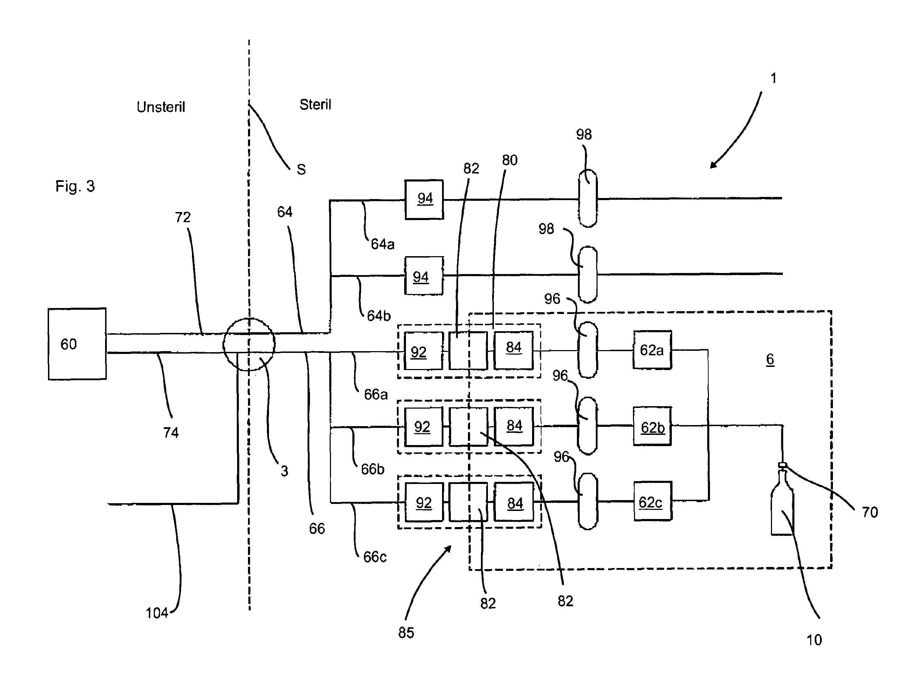

Figur 3 zeigt eine blockdiagrammartige Darstellung einer erfindungsgemäßen Vorrichtung. Dabei ist eine Druckbereitstellungseinrichtung 60 vorgesehen, bei der es sich beispielsweise um einen stationär angeordneten Kompressor handeln kann. Bereits von dieser Druckbereitststellungseinrichtung 60 gehen hier zwei Zuführleitungen 72 und 74 ab. Dabei dient die Zuführleitung 72 zur Versorgung von beispielsweise Ventilen der Maschine 1 mit Steuerluft. Die Zuführleitung 74 dient als Blasluftversorgung für die einzelnen Umformungsstationen.

Das Bezugszeichen 3 kennzeichnet eine Verteileinrichtung, bei der es sich hier um einen Drehverteiler handelt und welche dazu dient, die Luftströmungen von dem stehenden Teil der Maschine auf das bewegliche bzw. drehende Teil zu bringen. Gleichzeitig verläuft eine Sterilraumgrenze S, welche den sterilen Bereich und den unsterilen Bereich voneinander trennt auch in einem Bereich dieser Verteileinrichtung. Damit ist gesagt, dass die Elemente, welche auf dem drehenden Teil angeordnet sind, hier vorteilhaft auch zumindest teilweise in einem Reinraum bzw. Sterilraum 6 angeordnet sind. Dies gilt dabei insbesondere für die Blasluftventile 62a, 62b und 62c.

Im Anschluss an den Drehverteiler schließen sich eine Steuerluftleitung 64 und eine Blasluftleitung 66 an. Diese Leitungen verzweigen hier wiederum in Teilleitungen 64a, 64b bzw. 66a, 66b und 66c. Es wäre jedoch auch möglich, dass mehr oder weniger derartiger Verzweigungen vorgesehen sind. Das Bezugszeichen 94 bezieht sich auf eine Druckminderungseinrichtung, welche hier jeweils in den Steuerluftleitungen 64a und 64b angeordnet ist. Diese Druckminderungseinrichtung dient dazu, den von der Druckbereitstellungseinrichtung 60 zur Verfügung gestellten Druck zu mindern. Die Bezugszeichen 98 beziehen sich auf Kanäle, beispielsweise Ringkanäle, über welche diese Steuerluft dann auf die einzelnen Umformungsstationen (nicht gezeigt) bzw. deren Ventile verteilt werden kann.

Auch die Blasluftleitung 66 verzweigt hier in drei Teilleitungen 66a, 66b und 66c. Diese Luft, welche letztlich dem Reinraum 6 zugeführt wird, wird mittels eines in seiner Gesamtheit mit 85 bezeichneten Moduls weiterbehandelt. Dabei beziehen sich die Bezugszeichen 92 wiederum auf Druckminderungseinrichtungen, welche den Druck der von der Druckbereitstellungseinrichtung 60 zur Verfügung gestellten Druckluft reduzieren, und zwar auf das jeweils für die Blasvorgänge gewünschte Maß. Dabei können insbesondere unterschiedliche Druckniveaus eingestellt werden, die später für den Umformvorgang der Kunststoffbehältnisse verwendet werden, wie beispielsweise ein Vorblasdruck, ein Fertigblasdruck und dergleichen. An diese Druckreduziereinrichtungen 92 schließt sich eine in ihrer Gesamtheit mit 80 bezeichnete Filtereinrichtung an, welche hier zwei seriell angeordnete Filtereinheiten 82, 84 aufweist. Vorteilhaft handelt es sich bei diesen Filtereinheiten um sogenannte Hepa-Filter.

An die in ihrer Gesamtheit mit 85 bezeichnete Aufbereitungseinheit schließen sich die oben erwähnten Ringkanäle 96 an, von denen jeweils wieder (nicht gezeigte) Zuführleitungen zu den einzelnen Umformungsstationen führen.

Das Bezugszeichen 10 kennzeichnet wiederum ein Behältnis, welches von einer Beaufschlagungseinrichtung 70, wie einer Blasdüse 70, mit Blasluft beaufschlagt wird.

Die Anmelderin behält sich vor, sämtliche in den Anmeldungsunterlagen offenbarten Merkmale werden als erfindungswesentlich zu beanspruchen, sofern sie einzeln oder in Kombination gegenüber dem Stand der Technik neu sind.

### Bezugszeichenliste

- 1: Umformungseinrichtung
- 2: Transportrad/Transporteinrichtung
- 3: Verteileinrichtung
- 5: Reckstange
- 6: Reinraum
- 8: Blasstationen/Umformungsstationen
- 9: Führungskurve
- 10: Kunststoffvorformlinge
- 11: Folgeeinrichtung/Abschnitt
- 12: Schlitten
- 13: Boden
- 14: weitere Halterung
- 16: Wandung
- 17: Deckel
- 18: weitere Wandung
- 19: Träger
- 20: Behältnisse
- 22: Zuführeinrichtung
- 23: Halteeinrichtung
- 24: Abführeinrichtung
- 25: Dichtungseinrichtung
- 26: Träger
- 27: weitere Dichtungseinrichtung
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage
- 55: Sterilisationseinrichtung/Beaufschlagungseinrichtung
- 60: Druckbereitstellungseinrichtung
- 62a: Blasluftventil
- 62b: Blasluftventil
- 62c: Blasluftventil
- 64: Steuerluftleitung
- 64a: Teilleitung
- 64b: Teilleitung
- 66: Blasluftleitung
- 66a: Teilleitung
- 66b: Teilleitung
- 66c: Teilleitung
- 70: Beaufschlagungseinrichtung/Blasdüse
- 72: Zuführleitung
- 74: Zuführleitung/Verbindungsleitung
- 80: Reinigungseinrichtung/Filtereinrichtung
- 82: Filtereinheiten
- 84: Filtereinheiten
- 85: Aufbereitungseinheit/Modul
- 92: Druckminderungseinrichtung/Druckreduzierungseinrichtung
- 94: Druckminderungseinrichtung
- 96: Ringkanäle / Sammelleitung
- 98: Kanäle/ Sammelleitung
- 104: Zuführleitung
- L: Linie
- S: Sterilraumgrenze
- U: Umgebung U
- X: Achse X
- Y: Richtung

## Patentansprüche

1. Vorrichtung (1) zum Umformen von Kunststoffvorformlingen (10) zu Kunststoffbehältnissen (20) mit einem beweglichen Träger (2), an dem eine Vielzahl von Umformungsstationen (8) zum Umformen der Kunststoffvorformlinge zu den Kunststoffbehältnissen (20) angeordnet ist, wobei jede Umformungsstation (8) eine Beaüfschlagungseinrichtung (70) aufweist, welche die Kunststoffvorformlinge (10) zu deren Expansion mit einem gasförmigen Medium beaufschlagt, und mit einer Druckbereitstellungseinrichtung (60), welche das gasförmige Medium bereitstellt, wobei diese Druckbereitstellungseinrichtung (60) stationär angeordnet ist und die Umformungsstationen (8) über wenigstens eine Verbindungsleitung (74, 66) mit dem gasförmigen Medium zur Expansion der Kunststoffvorformlinge (10) versorgt und wobei eine Verteileinrichtung (3) vorgesehen ist, welche das gasförmige Medium von der stationär angeordneten Druckbereitstellungseinrichtung (60) an die beweglich angeordneten Umformungsstationen (8) verteilt, wobei jede Umformungstation (8) wenigstens eine pneumatisch betätigte Ventileinrichtung (62a, 62b, 62c) aufweist und wobei diese Ventileinrichtung (62a, 62b. 62c) ebenfalls in Fluidkommunikation mit der Druckbereitstellungseinrichtung (60) steht und von dieser versorgt ist, und wobei die Vorrichtung (1) einen Reinraum (6) aufweist, innerhalb dessen die Umformungsstationen (8) wenigstens abschnittsweise angeordnet sind, wobei dieser Reinraum (6) mittels wenigstens einer Wandung gegenüber einer Umgebung abgegrenzt ist **dadurch gekennzeichnet, dass**
eine Steuerluftleitung (64), welche die Ventileinrichtung (62a, 62b, 62c) mit einem Steuergas versorgt, und eine Blasluftleitung (66), welche die Umformungsstationen (8) mit dem gasförmigen Medium versorgt, in einer Strömungsrichtung des gasförmigen Mediums zumindest stromabwärts der Verteileinrichtung (3) voneinander getrennt sind.

2. Vorrichtung (1) nach Anspruch 1,
**dadurch gekennzeichnet, dass**
eine erste Zuführleitung (72) vorgesehen ist, welche der Verteileinrichtung (3) das Steuergas zuführt und eine zweite Zuführleitung (74) vorgesehen ist, welche der Verteileinrichtung (3) die Blasluft zuführt, in einer Strömungsrichtung des gasförmigen Mediums stromaufwärts der Verteileinrichtung (3) wenigstens abschnittsweise voneinander getrennt sind.

3. Vorrichtung (1) nach wenigstens einem der vorangegangenen Ansprüche,
**dadurch gekennzeichnet, dass**
in wenigstens einer Verbindungsleitung (66, 74), über welche den Umformungsstationen (8) Blasluft zugeführt wird, eine Reinigungseinrichtung (80) zum Reinigen der Blasluft vorgesehen ist.

4. Vorrichtung (1) nach wenigstens einem der vorangegangenen Ansprüche,
**dadurch gekennzeichnet, dass**
die Vorrichtung (1) wenigstens eine Druckminderungseinrichtung (92) aufweist, welche zwischen der Druckbereitstellungseinrichtung (60) und den Umformungsstationen (8) angeordnet ist.

5. Vorrichtung (1) nach Anspruch 4,
**dadurch gekennzeichnet, dass**
die Druckminderungseinrichtung (92) zwischen der Verteileinrichtung (3) und den Umformungsstationen (8) angeordnet ist.

6. Vorrichtung (1) nach den Ansprüchen 3 und 4,
**dadurch gekennzeichnet, dass**
die Druckminderungseinrichtung (92) zwischen der Verteileinrichtung (3) und der Reinigungseinrichtung (80) angeordnet ist.

7. Vorrichtung (1) nach wenigstens einem der vorangegangenen Ansprüche,
**dadurch gekennzeichnet, dass**
die Vorrichtung (1) wenigstens eine Sammelleitung (96, 98) aufweist, die wenigstens zeitweise in Strömungsverbindung mit mehreren Umformungsstationen (8) steht.

8. Vorrichtung (1) nach wenigstens einem der vorangegangenen Ansprüche,
**dadurch gekennzeichnet, dass**
die Vorrichtung (1) eine Zuführleitung (104) für ein Sterilisationsmedium aufweist, wobei diese Zuführleitung mit der Blasluftleitung (66) in Strömungsverbindung bringbar ist.

9. Vorrichtung (1) nach Anspruch 8,
**dadurch gekennzeichnet, dass**
die Zuführleitung (104) in die Zuführleitung (74) mündet.

10. Verfahren zum Umformen von Kunststoffvorformlingen (10) zu Kunststoffbehältnissen (20) wobei die Kunststoffvorformlinge mittels einer Transporteinrichtung (2) entlang eines vorgegebenen Transportpfads transportiert werden und während dieses Transports von einer Vielzahl von Umformungsstationen (8) durch Beaufschlagung mit Druckluft zu den Kunststoffbehältnissen (20) umgeformt werden, wobei die Kunststoffvorformlinge (10) während dieser Umformung innerhalb eines Reinraums (6) transportiert werden und wobei eine Blasluft zum Umformen der Kunststoffvorformlinge (10) durch eine stationär angeordnete Druckbereitstellungseinrichtung (60) bereit gestellt und über Verbindungsleitungen (66, 72, 74) sowie eine Verteileinrichtung (3) den Umformungsstationen (8) zur Verfügung gestellt wird und wobei wenigstens eine Ventileinrichtung (62a, 62b, 62c) der Vorrichtung pneumatisch betätigt wird
**dadurch gekennzeichnet, dass**
eine Steuerluft zum Betätigen der Ventileinrichtung (62a, 62b, 62c) und die Blasluft zum Umformen der Kunststoffvorformlinge (10) wenigstens stromabwärts der Verteileinrichtung (3) voneinander getrennt werden.

## Claims

1. An apparatus (1) for the shaping of plastics material pre-forms (10) into plastics material containers (20) with a movable carrier (2) on which are arranged a plurality of shaping stations (8) for shaping the plastics material pre-forms into the plastics material containers (20), wherein each shaping station (8) has a stressing device (70) which acts upon the plastics material pre-forms (10) for the expansion thereof with a gaseous medium, and with a pressure preparation device (60) which prepares the gaseous medium, wherein this pressure preparation device (60) is arranged in a stationary manner and supplies the shaping stations (8) with the gaseous medium for the expansion of the plastics material pre-forms (10) by way of at least one connection line (74, 66) and wherein a distribution device (3) is provided which distributes the gaseous medium from the pressure preparation device (60) arranged in a stationary manner to the shaping stations (8) arranged in a movable manner, wherein each shaping station (8) has at least one pneumatically actuated valve device (62a, 62b, 62c) and wherein this valve device (62a, 62b. 62c) is likewise in fluid communication with the pressure preparation device (60) and is supplied by the latter, and wherein the apparatus (1) has a clean room (6), inside which the shaping stations (8) are arranged at least in sections, wherein this clean room (6) is bounded off from an environment by means of at least one wall, **characterized in that** a control air line (64), which supplies the valve device (62a, 62b, 62c) with a control gas, and a blowing air line (66), which supplies the shaping stations (8) with the gaseous medium, are separate from each other at least downstream of the distribution device (3) in a flow direction of the gaseous medium.

2. An apparatus (1) according to claim 1, **characterized in that** a first supply line (72) is provided which supplies the control gas to the distribution device (3), and a second supply line (74) is provided which supplies the blowing air to the distribution device (3), and they are separate from each other at least in sections downstream of the distribution device (3) in a flow direction of the gaseous medium.

3. An apparatus (1) according to at least one of the preceding claims, **characterized in that** a cleaning device (80) for cleaning the blowing air is provided in at least one connecting line (66, 74) by way of which blowing air is supplied to the shaping stations (8).

4. An apparatus (1) according to at least one of the preceding claims, **characterized in that** the apparatus (1) has at least one pressure reduction device (92) which is arranged between the pressure preparation device (60) and the shaping stations (8).

5. An apparatus (1) according to claim 4, **characterized in that** the pressure reduction device (92) is arranged between the distribution device (3) and the shaping stations (8).

6. An apparatus (1) according to claims 3 and 4, **characterized in that** the pressure reduction device (92) is arranged between the distribution device (3) and the cleaning device (80).

7. An apparatus (1) according to at least one of the preceding claims, **characterized in that** the apparatus (1) has at least one collecting line (96, 98) which is connected in terms of flow at least for a time to a plurality of shaping stations (8).

8. An apparatus (1) according to at least one of the preceding claims, **characterized in that** the apparatus (1) has a supply line (104) for a sterilization medium, wherein this supply line is capable of being connected in terms of flow to the blowing air line (66).

9. An apparatus (1) according to claim 8, **characterized in that** the supply line (104) opens into the supply line (74).

10. A method of shaping plastics material pre-forms (10) into plastics material containers (20), wherein the plastics material pre-forms are conveyed along a pre-set conveying path by means of a conveying device (2) and are shaped into the plastics material containers (20) by being acted upon with compressed air by a plurality of shaping stations (8) during this conveying, wherein the plastics material pre-forms (10) are conveyed inside a clean room (6) during this shaping and wherein blowing air for shaping the plastics material pre-forms (10) is prepared by a pressure preparation device (60) arranged in a stationary manner and is made available to the shaping stations (8) by way of connection lines (66, 72, 74) and a distribution device (3) and wherein at least one valve device (62a, 62b, 62c) of the apparatus is actuated in a pneumatic manner, **characterized in that** control air for actuating the valve device (62a, 62b, 62c) and the blowing air for shaping the plastics material pre-forms (10) are separated from each other at least downstream of the distribution device (3).

## Revendications

1. Installation (1) pour la transformation de préformes en matière plastique (10) en récipients en matière plastique (20), avec un support mobile (2) sur lequel est disposée une pluralité de stations de transformation (8) permettant de transformer les préformes en matière plastique (10) pour obtenir les récipients en matière plastique (20), chaque station de transformation (8) comportant un dispositif d'application (70) appliquant un fluide gazeux dans les préformes en matière plastique pour expanser celles-ci, et avec un dispositif d'alimentation en pression (60) qui fournit le fluide gazeux, ledit dispositif d'alimentation en pression (60) étant fixe et alimentant en fluide gazeux les stations de transformation (8) par l'intermédiaire d'au moins une conduite de raccordement (74, 66) pour l'expansion des préformes en matière plastique (10), et un dispositif distributeur (3) étant prévu, lequel distribue le fluide gazeux aux différentes stations de transformation (8) mobiles depuis le dispositif d'alimentation en pression (60) fixe, chaque station de transformation (8) comportant au moins un dispositif à vanne (62a, 62b, 62c) actionné pneumatiquement et ledit dispositif à vanne (62a, 62b. 62c) étant également en communication fluidique avec le dispositif d'alimentation en pression (60) et étant alimenté par celui-ci, et l'installation (1) comportant un espace stérile (6) à l'intérieur duquel les stations de transformation (8) sont au moins disposées en sections, ledit espace stérile (6) étant délimité par au moins une paroi par rapport à l'environnement,
**caractérisée en ce qu'**
une conduite d'air de commande (64) alimentant le dispositif à vanne (62a, 62b, 62c) en gaz de commande, et une conduite d'air de soufflage (66) alimentant les stations de transformation (8) en fluide gazeux sont séparées l'une de l'autre au moins en aval du dispositif distributeur (3) dans une direction d'écoulement du fluide gazeux.

2. Installation (1) selon la revendication 1, **caractérisée en ce qu'**ils
sont prévues une première conduite d'amenée (72) conduisant le gaz de commande vers le dispositif distributeur (3) et une deuxième conduite d'amenée (74) conduisant l'air de soufflage vers le dispositif distributeur (3), lesquelles sont au moins partiellement séparées l'une de l'autre en amont du dispositif distributeur (3) dans une direction d'écoulement du fluide gazeux.

3. Installation (1) selon au moins une des revendications précédentes, **caractérisée en ce qu'**
un dispositif purificateur (80) est prévu pour la purification de l'air de soufflage dans au moins une conduite de raccordement (66, 74) alimentant les stations de transformation (8) en air de soufflage.

4. Installation (1) selon au moins une des revendications précédentes, **caractérisée en ce que**
ladite installation (1) comporte au moins un dispositif réducteur de pression (92) disposé entre le dispositif d'alimentation en pression (60) et les stations de transformation (8).

5. Installation (1) selon la revendication 4, **caractérisée en ce que**
le dispositif réducteur de pression (92) est disposé entre le dispositif distributeur (3) et les stations de transformation (8).

6. Installation (1) selon les revendications 3 et 4, **caractérisée en ce que**
le dispositif réducteur de pression (92) est disposé entre le dispositif distributeur (3) et le dispositif purificateur (80).

7. Installation (1) selon au moins une des revendications précédentes, **caractérisée en ce que**
ladite installation (1) comporte au moins une conduite collectrice (96, 98) au moins temporairement en liaison d'écoulement avec plusieurs stations de transformation (8).

8. Installation (1) selon au moins une des revendications précédentes, **caractérisée en ce que**
ladite installation (1) comporte une conduite d'amenée (104) pour un fluide de stérilisation, ladite conduite d'amenée pouvant être mise en liaison d'écoulement avec la conduite d'air de soufflage (66).

9. Installation (1) selon la revendication 8, **caractérisée en ce que**
la conduite d'amenée (104) débouche dans la conduite d'amenée (74).

10. Procédé de transformation de préformes en matière plastique (10) en récipients en matière plastique (20), lesdites préformes en matière plastique étant transportées le long d'un chemin de transport défini au moyen d'un dispositif de transport (2) et étant déformées pendant ce transport par une pluralité de stations de transformation (8) refoulant de l'air comprimé pour obtenir les récipients en matière plastique (20), les préformes en matière plastique (10) étant transportées à l'intérieur d'un espace stérile (6) pendant cette transformation et de l'air de soufflage pour la transformation des préformes en matière plastique (10) étant préparé par un dispositif d'alimentation en pression (60) fixe et étant fourni aux stations de transformation (8) par l'intermédiaire de conduites de raccordement (66, 72, 74) et d'un dispositif distributeur (3), et au moins un dispositif à vanne (62a, 62b, 62c) de l'installation étant actionné pneumatiquement,
**caractérisé en ce qu'**
un air de commande pour l'actionnement du dispositif à vanne (62a, 62b, 62c) et l'air de soufflage pour la transformation des préformes en matière plastique (10) sont séparés l'un de l'autre au moins en aval du dispositif distributeur (3).
